## Europäisches Patentamt

## European Patent Office

## Office européen des brevets

(11) Publication number: **0 144 768**
**B1**

(12) # EUROPEAN PATENT SPECIFICATION

(45) Date of publication of patent specification: **16.09.87**

(51) Int. Cl.⁴: **C 08 L 77/00,** C 08 L 13/00 //
(C08L77/00,
13:00),(C08L13/00, 77:00)

(21) Application number: **84113357.2**

(22) Date of filing: **06.11.84**

(54) **Thermoplastic polymer compositions.**

(30) Priority: **07.11.83 US 549501**

(43) Date of publication of application:
**19.06.85 Bulletin 85/25**

(45) Publication of the grant of the patent:
**16.09.87 Bulletin 87/38**

(84) Designated Contracting States:
**BE DE FR GB IT NL SE**

(56) References cited:
**US-A-4 197 379**

**PATENTS ABSTRACTS OF JAPAN, vol. 2, no.
59 (C-78)(562), April 27, 1978
Die Makromolekulare Chemie, Rapid
communications 1980, vol. 1, p. 113-117**

(73) Proprietor: **POLYSAR LIMITED
Sarnia Ontario N7T 7M2 (CA)**

(72) Inventor: **Sato, Kyosaku
319 Twin Lakes Drive
Sarnia Ontario (CA)**

(74) Representative: **von Kreisler, Alek, Dipl.-Chem.
et al
Deichmannhaus am Hauptbahnhof
D-5000 Köln 1 (DE)**

Courier Press, Leamington Spa, England.

## Description

### Background of the invention

This invention is directed to novel thermoplastic compositions comprising a nylon and a carboxylated synthetic rubber and to a process for making such compositions.

### Description of the prior art

It is well known in the prior art that polyvinyl chloride can be mixed with butadiene-acrylonitrile polymers (nitrile polymers) and with carboxylated butadiene-acrylonitrile polymers (carboxylated nitrile polymers). It is also known from U.S. Patent 4 197 379 that crystalline polyamide and a nitrile polymer may be mixed together and modified by reaction with a dimethylol phenol compound to yield an elastoplastic composition. U.S. Patent 4 383 083 describes thermoplastic compositions which comprise partly aromatic polyamides and a polymer of a $C_4$—$C_6$ alkadiene and acrylonitrile. It is also known from the article in Die Makromolekulare Chemie, Rapid Communications 1980 Volume 1 pages 113 to 117 that certain metal salts influence the softening temperature of nylon 6.

### Summary of the invention

The invention is directed in one embodiment to a thermoplastic composition comprising, per 100 parts by weight of polymeric materials, as one polymeric material from about 20 to about 90 parts by weight of a crystalline polyamide and as a second polymeric material from about 10 to about 80 parts by weight of a synthetic rubbery polymer which polymer comprises, for a total of 100 parts by weight, from about 25 to about 40 parts by weight of acrylonitrile or methacrylonitrile, from about 0.5 to about 10 parts by weight of one or more α,β-unsaturated carboxylic acid and the balance butadiene, and as non-polymeric additives from about 0.1 to about 15 parts by weight per 100 parts by weight of polyamide of an additive selected from the halides of lithium, magnesium, calcium and zinc, and from about 1 to about 10 parts by weight per 100 parts by weight of polymeric materials of an additive selected from the oxides and hydroxides of magnesium, calcium, barium and zinc and the peroxides of calcium and zinc.

The invention is directed in a second embodiment to a process for producing a thermoplastic polymeric composition comprising mixing from about 20 to about 90 parts by weight of a crystalline polyamide and from about 0.1 to about 15 parts by weight per 100 parts by weight of the polyamide of an additive selected from the halides of lithium, magnesium, calcium and zinc, from about 10 to about 80 parts by weight of a synthetic rubbery polymer, for a total of 100 parts by weight of polyamide and synthetic polymer, said synthetic polymer comprising, for a total of 100 parts by weight, from about 25 to about 40 parts by weight of acrylonitrile or methacrylonitrile, from about 0.5 to about 10 parts by weight of one or more α,β-unsaturated carboxylic acid and the balance butadiene, and an additive selected from the oxides and hydroxides of magnesium, calcium, barium and zinc and the peroxides of calcium and zinc in an amount of from about 1 to about 10 parts by weight per 100 parts by weight of polyamide and synthetic polymer, said mixing being at a temperature of from about 180°C to the melting point of the polyamide for a time long enough to yield an essentially uniform thermoplastic polymeric composition.

### Detailed description of the invention

The crystalline polyamide, also known as nylon, used in this invention is a high molecular weight solid polymer having recurring amide groups within the polymer. Such polyamides are well known and may be prepared by polymerization of one or more epsilon-lactams or amino acids or by condensation of one or more dibasic acids and one or more diamines. Examples of such polyamides include nylon 6 (polycaprolactam), nylon 12 (polylauryllactam), nylon 6,6 (polyhexamethyleneadipamide), nylon 6,10 (polyhexamethylenesebacamide), nylon 11 (condensation product of 11-amino-undecanoic acid), and mixtures thereof. The majority of such nylons have melting points between about 160° and 230°C.

The synthetic rubbery polymer used in this invention is a high molecular weight solid polymer having recurring carboxylic groups along the polymer chain. Such synthetic polymers are well known and may be prepared by the well known emulsion free radical polymerization process and comprise from about 25 to about 40 parts by weight of acrylonitrile or methacrylonitrile, from about 0.5 to about 10 parts by weight of one or more α,β-unsaturated carboxylic acid and the balance butadiene, for a total of 100 parts by weight. Suitable such α,β-unsaturated carboxylic acids include acrylic, methacrylic, fumaric, maleic and itaconic acids. The polymer contains from about 25 to about 40 parts by weight of acrylonitrile. The molecular weight of the polymer is generally described by the Mooney viscosity (ML 1+4 at 100°C) of from about 40 to about 80.

One additive incorporated into the compositions of this invention is selected from the halides of lithium, magnesium, calcium and zinc and is present in the composition at a level of from about 0.1 to about 15 parts by weight per 100 parts by weight of the polyamide. While it is not clear what the role of this additive is, it is believed that it may influence the melting point of the polyamide and/or it may influence the compatibility of the polyamide and the synthetic polymer. When this additive is present in the polyamide in the range of from about 0.1 to about 1 or 2 parts by weight, it is believed that the additive has little effect on the melting point of the polyamide. Suitable halides of the metals listed include the bromides, chlorides and iodides. On a cost basis, the chlorides and bromides are preferred and of these the chlorides are most preferred. Lithium chloride is a most preferred additive. The amount of this additive is preferably from about 1 to about 12 parts by weight per 100 parts by weight of polyamide and most preferably from about 2 to about 10 parts by weight per 100 parts by weight of the polyamide.

A second additive incorporated into the compositions of this invention is selected from the oxides and hydroxides of magnesium, calcium, barium and zinc and the peroxides of calcium and zinc at a level of from about 1 to about 10 parts by weight per 100 parts by weight of polyamide and synthetic polymer. It is believed that this additive reacts with the acid groups present leading to the formation of ionic bonds which act like crosslinks in the composition and provide at least part of the desired strength and thermoplastic properties in conjunction with the strength and thermoplastic properties contributed by the polyamide. A preferred level of this additive is from about 1 to about 8, and most preferably from about 2 to about 6, parts by weight per 100 parts by weight of polyamide plus synthetic polymer. On a cost and availability basis, zinc oxide, hydroxide and peroxide, magnesium oxide and hydroxide, and calcium oxide and hydroxide are preferred. Zinc oxide is the most preferred additive.

The compositions of this invention may also contain any one or more of fillers, processing aids, antioxidants or stabilizers and other components. Suitable fillers for use in the compositions include carbon black, silica, calcium silicate, clay and calcium carbonate and mixtures thereof in amounts from about 2 to about 20, especially 2 to 10, parts by weight per 100 parts by weight of polyamide plus synthetic polymer. Suitable processing aids include one or more of those well known in the rubber and plastics industries, such as the low molecular weight polyethylenes, acrylic-type polymers and the like, and suitable antioxidants or stabilizers are those well known in the rubber and plastics industries and especially include those materials known to be of value for high temperature stabilization including the hindered phenols, substituted phosphites, the complex cadmium-barium stabilizers, mixtures thereof and the like. Such processing aids may be used at levels of from about 0.2 to about 5 parts by weight of each such processing aid and such antioxidants or stabilizers may be used at levels of from about 0.1 to about 2 parts by weight of each such antioxidant or stabilizer, both per 100 parts by weight of polyamide plus synthetic polymer.

The compositions of the invention comprise, per 100 parts by weight of polymeric materials, as one polymeric material from about 20 to about 90 parts by weight of crystalline polyamide and as second polymeric material from about 10 to about 80 parts by weight of synthetic rubbery polymer. Preferably, the composition comprises from about 35 to about 90 parts by weight of crystalline polyamide and from about 10 to about 65 parts by weight of synthetic rubbery polymer. To produce compositions which are thermoplastic but also possess some rubbery characteristics, the compositions comprise from about 35 to about 50 parts by weight of crystalline polyamide and from about 50 to about 65 parts by weight of synthetic rubbery polymer. To produce compositions which are thermoplastic and have very little rubbery characteristic, the compositions comprise from about 60 to about 90 parts by weight of crystalline polyamide and from about 10 to about 40 parts by weight of synthetic rubbery polymer.

The process of producing the compositions of this invention comprises mixing the components at a temperature of from about 180°C to the melting point of the polyamide for a time long enough to yield an essentially uniform polymeric composition. Generally, the temperature for such mixing will be from about 180° to about 230°C. The mixing may be undertaken in essentially one stage with all the components added at or immediately after the start of the mixing or in two or more stages with the polyamide and first additive being at least partially mixed first and the remaining components being added thereto or separately in a second mixing operation. Such mixing may be undertaken in rubber or plastics processing equipment such as internal mixers and mixing extruders. The first additive, that is the halide of lithium, magnesium, calcium or zinc, may be added to and mixed with the polyamide first, either as a separate stage of the mixing or before the synthetic polymer and second additive are provided; alternatively, the first additive and the polyamide may be partially mixed, the other components except for the synthetic polymer may be added and mixed therewith and finally the synthetic polymer may be added and mixed therewith; however, satisfactory mixing can be achieved by adding all the components at a single stage, for instance in an internal mixer. Any processing aids, fillers, antioxidants and stabilizers will also be similarly added to the composition. The so-formed thermoplastic compositions may be molded by any of the known means, usually at a temperature of about 180° to about 220°C, to produce shaped articles or sheets.

It is surprising that the polyamide and synthetic polymer can be mixed together satisfactorily to yield a thermoplastic material having a good balance of properties. The polymeric compositions of this invention may be used for the production of various types of hose in which the low permeability of the hose is significant, for a variety of end-uses where resistance to organic fluids is necessary over a wide temperature range, for a variety of end-uses where abrasion resistance is necessary, and the like, thus making the compositions useful in belting, hose, roll covers and mechanical goods.

The following examples illustrate the scope of the invention. All parts are parts by weight unless specified otherwise and all test procedures are ASTM procedures unless otherwise specified.

Example 1

Using an internal mixer operated at 220°C, the polymer mixtures shown in Table I were prepared and evaluated. The nylon was first added to the mixer followed about 1 minute later by the lithium chloride, followed about 3 minutes later by the antioxidant, processing acids and silica and by the carboxylated nitrile polymer, followed about 6 minutes later by the zinc oxide, the total mixing time being about 25 minutes, except for Experiment #1 in which the total mixing time was about 12 minutes and Experiment #2 in which the total mixing time was about 17 minutes. The carboxylated nitrile polymer contained about 29 weight percent of acrylonitrile, about 7 weight per cent of carboxylic acid and the balance butadiene and had a Mooney viscosity (ML 1+4 at 100°C) of about 50. The resulting mixtures were molded in a press into sheets for testing, the molding being for 10 minutes at 200°C.

Of these thermoplastic compositions Experiments #1, 2 and 3 are controls. The improved balance of properties for the compositions of Experiments #4, 5 and 6 are readily apparent.

TABLE I

| Experiment # | 1[x] | 2[x] | 3[x] | 4 | 5 | 6 |
|---|---|---|---|---|---|---|
| Nylon 11 | 35 | 35 | 35 | 35 | 35 | 35 |
| Carboxylated nitrile polymer | 65 | 65 | 65 | 65 | 65 | 65 |
| Lithium chloride | — | 2.8 | — | 2.8 | 2.8 | 2.8 |
| Zinc oxide | — | — | 5 | 5 | 3 | 1 |
| Stabilizer-1 | 0.75 | 0.75 | 0.75 | 0.75 | 0.75 | 0.75 |
| Stabilizer-2 | 0.25 | 0.25 | 0.25 | 0.25 | 0.25 | 0.25 |
| Processing aid-1 | 0.5 | 0.5 | 0.5 | 0.5 | 0.5 | 0.5 |
| Processing aid-2 | 2 | 2 | 2 | 2 | 2 | 2 |
| Silica | 5 | 5 | 5 | 5 | 5 | 5 |

TABLE I (cont'd)

| Experiment # | | 1[x] | 2[x] | 3[x] | 4 | 5 | 6 |
|---|---|---|---|---|---|---|---|
| Properties | | | | | | | |
| Tensile strength | MPa | 5.5 | 10.8 | 28.8 | 22.3 | 24.1 | 14.7 |
| Elongation | % | 280 | 300 | 420 | 310 | 310 | 300 |
| 100% Modulus | MPa | 4.4 | 5.9 | 12.3 | 10.8 | 9.8 | 7.7 |
| 300% Modulus | MPa | — | — | 20.3 | — | 22.8 | — |
| Young's modulus | MPa | 20 | 15 | 28 | 25 | 20 | 14 |
| Hardness—Shore A | | 72 | 87 | 94 | 81 | 87 | 80 |
| —Short D | | 24 | 31 | 43 | 39 | 41 | 31 |
| Tensile set | % | — | — | 83 | 38 | 45 | 65 |

Notes:

Stabilizer-1 is a substituted phosphite; Stabilizer-2 is a hindered phenol; Processing aid-1 is an acrylic polymer; and Processing aid-2 is a low molecular weight polyethylene.

[x] Control example

Example 2

Using a procedure essentially as described in Example 1, the compositions shown in Table II were prepared and evaluated. Experiment #11 is a control and Experiment #12 illustrates the need for zinc oxide to provide strength properties.

**0 144 768**

TABLE II

| Experiment # | | 11[x)] | 12 |
|---|---|---|---|
| Nylon 11 | | 35 | 35 |
| Carboxylated nitrile polymer | | 65 | 65 |
| Magnesium chloride | | 3.5 | 3.5 |
| Silica | | 5 | 5 |
| Stabilizer-1 | | 0.25 | 0.25 |
| Stabilizer-2 | | 0.75 | 0.75 |
| Processing aid-1 | | 0.5 | 0.5 |
| Processing aid-2 | | 2 | 2 |
| Zinc oxide | | — | 5 |
| Properties | | | |
| Tensile strength | MPa | 8.3 | 34 |
| Elongation | % | 320 | 420 |
| 100% Modulus | MPa | 5.9 | 11.6 |
| 300% Modulus | MPa | 8.2 | 20.8 |
| Tensile set | % | 64 | 69 |
| Young's modulus | MPa | 33 | 31 |

Note:
Stabilizer-1 is a hindered phenol; Stabilizer-2 is a substituted phosphite; Processing aid-1 is an acrylic polymer; Processing aid-2 is low molecular weight polyethylene.
[x)] Control example

Example 3
Using essentially the procedure described in Example 1, the compositions shown in Table III were prepared and tested. The improved strength properties when both lithium chloride and zinc oxide were present are readily apparent. Permeability to Freon, using Freon 12 at a test temperature of 65°C and determining the amount of Freon which permeates through a thin sheet of the compositions for a standard period of time, is reduced when both lithium chloride and zinc oxide are present.
Experiments #21, 22 and 23 are controls and Experiment #28, also a control, shows the properties for the pure nylon.

5

TABLE III

| Experiment # | | 21[x] | 22[x] | 23[x] | 24 |
|---|---|---|---|---|---|
| Nylon 11 | | 60 | 60 | 60 | 60 |
| Carboxylated nitrile polymer | | 40 | 40 | 40 | 40 |
| Lithium chloride | | — | 4.8 | — | 4.8 |
| Zinc oxide | | — | — | 5 | 5 |
| Stabilizer-1 | | 0.75 | 0.75 | 0.75 | 0.75 |
| Stabilizer-2 | | 0.25 | 0.25 | 0.25 | 0.25 |
| Processing aid-1 | | 0.5 | 0.5 | 0.5 | 0.5 |
| Processing aid-2 | | 2 | 2 | 2 | 2 |
| Silica | | 5 | 5 | 5 | 5 |
| Properties- | | | | | |
| Tensile strength | MPa | 11.8 | 13.2 | 24.1 | 32 |
| Elongation | % | 130 | 140 | 360 | 320 |
| 100% Modulus | MPa | 11.5 | 12.8 | 16.1 | 16.2 |
| 300% Modulus | MPa | — | — | 20.6 | 28.4 |
| Tensile set | % | 47 | 71 | 201 | 143 |
| Young's modulus | MPa | 78 | 92 | 96 | 92 |
| Permeability to Freon $cm^2/sec/10^8$ bar | | 1.6 | TL | 0.96 | TL |

Notes:

Stabilizer-1 is a hindered phenol; Stabilizer-2 is a substituted phosphite; Processing aid-1 is an acrylic polymer; Processing aid-2 is a low molecular weight polyethylene. TL means too low to measure.

[x] Control example

TABLE III- Cont'd

| Experiment # | | 25 | 26 | 27 | 28[x] |
|---|---|---|---|---|---|
| Nylon 11 | | 60 | 60 | 60 | 100 |
| Carboxylated nitrile polymer | | 40 | 40 | 40 | — |
| Lithium chloride | | 4.8 | 4.8 | 4.8 | — |
| Zinc oxide | | 3 | 2 | 1 | — |
| Stabilizer-1 | | 0.75 | 0.75 | 0.75 | — |
| Stabilizer-2 | | 0.25 | 0.25 | 0.25 | — |
| Processing aid-1 | | 0.5 | 0.5 | 0.5 | — |
| Processing aid-2 | | 2 | 2 | 2 | — |
| Silica | | 5 | 5 | 5 | — |
| Properties | | | | | |
| Tensile strength | MPa | 35.3 | 28.8 | 25.8 | 36.5 |
| Elongation | % | 310 | 290 | 280 | 20 |
| 100% Modulus | MPa | 17.2 | 17.7 | 16.2 | — |
| 300% Modulus | MPa | 32.4 | — | — | — |
| Tensile set | % | 148 | 138 | 155 | 13 |
| Young's modulus | MPa | 102 | 99 | 90 | 176 |
| Permeability to Freon cm$^2$/sec/10$^8$ bar | | TL | — | — | TL |

[x] Control example

### Example 4

Using the procedure described in Example 1, the composition shown in Table IV was prepared and tested. Instead of using zinc oxide as the second additive, zinc peroxide was used. The zinc peroxide was used as an approximately 50:50 (by weight) masterbatch of nitrile polymer and zinc peroxide known as PA-50. Good strength properties are shown for the composition.

### Example 5

This Example illustrates the use of alternative second additives. The compositions shown in Table V were prepared and tested. An internal mixer operated at 220°C and 50 rpm was used, the nylon and lithium chloride being added first and mixed for about 2 to 3 minutes, the remaining ingredients except for the carboxylated nitrile polymer and Stabilizer-1 being added next and mixed for 1 to 2 minutes and the carboxylated nitrile polymer and Stabilizer-1 being added last with the mixing being continued for about 5 to 7 minutes to produce essentially uniform mixtures. The properties of the compositions are shown including the melt flow index (MFI) which was measured in accordance with ASTM D1238, Condition L.

### Example 6

This Example illustrates the use of alternative first additives. Following the procedure described in Example 5, the compositions shown in Table VI were prepared and tested.

**0 144 768**

TABLE IV

| | | |
|---|---|---|
| Nylon 11 | | 35 |
| Carboxylated nitrile polymer | | 60 |
| Lithium chloride | | 2.8 |
| Stabilizer-1 | | 0.75 |
| Stabilizer-2 | | 0.25 |
| Processing aid-1 | | 0.5 |
| Processing aid-2 | | 2 |
| Silica | | 5 |
| PA-50 | | 10 |
| Properties<br>Tensile strength | MPa | 20.4 |
| Elongation | % | 240 |
| 100% Modulus | MPa | 11.3 |
| Young's modulus | MPa | 23 |
| Hardness shore D | | 46 |

TABLE V

| Experiment # | | 31 | 32 | 33 | 34 | 35 |
|---|---|---|---|---|---|---|
| Nylon 11 | | 60 | 60 | 60 | 60 | 60 |
| Carboxylated nitrile polymer | | 40 | 40 | 40 | 40 | 40 |
| Lithium chloride | | 1 | 1 | 1 | 1 | 1 |
| Stabilizer-1 | | 0.75 | 0.75 | 0.75 | 0.75 | 0.75 |
| Stabilizer-2 | | 0.25 | 0.25 | 0.25 | 0.25 | 0.25 |
| Processing aid-1 | | 0.5 | 0.5 | 0.5 | 0.5 | 0.5 |
| Processing aid-2 | | 2 | 2 | 2 | 2 | 2 |
| Silica | | 5 | 5 | 5 | 5 | 5 |
| Zinc oxide | | 3 | — | — | — | — |
| Magnesium oxide | | — | 1.5 | — | — | — |
| Magnesium hydroxide | | — | — | 2.15 | — | — |
| Calcium oxide | | — | — | — | 2.1 | — |
| Calcium hydroxide | | — | — | — | — | 2.7 |
| Properties | | | | | | |
| Tensile strength | MPa | 24.5 | 23 | 24 | 24.5 | 27 |
| Elongation | % | 320 | 320 | 340 | 310 | 300 |
| 100% Modulus | MPa | 15.7 | 13.7 | 12.8 | 12.8 | 14.2 |
| 300% Modulus | MPa | 22.2 | 21.1 | 20.6 | 23.1 | — |
| Tensile set | % | 190 | 145 | 175 | 175 | 138 |
| MFI g/10 min. | | 0.7 | 0.41 | 0.53 | 0.75 | 0.08 |

# 0 144 768

TABLE VI

| Experiment # | | 41 | 42 | 43 |
|---|---|---|---|---|
| Nylon 11 | | 60 | 60 | 60 |
| Carboxylated nitrile polymer | | 40 | 40 | 40 |
| Zinc chloride | | 1 | — | — |
| Magnesium chloride | | — | 1 | — |
| Calcium chloride | | — | — | 1 |
| Stabilizer-1 | | 0.75 | 0.75 | 0.75 |
| Stabilizer-2 | | 0.25 | 0.25 | 0.25 |
| Processing aid-1 | | 0.5 | 0.5 | 0.5 |
| Processing aid-2 | | 2 | 2 | 2 |
| Silica | | 5 | 5 | 5 |
| Zinc oxide | | 5 | 5 | 5 |
| Properties | | | | |
| Tensile strength | MPa | 25.5 | 23.2 | 24.4 |
| Elongation | % | 330 | 340 | 320 |
| 100% Modulus | MPa | 14.1 | 14.2 | 16.4 |
| 300% Modulus | MPa | 21.1 | 21.1 | 22.3 |
| Tensile set | % | 210 | 203 | 175 |
| MFI g/10 min. | | 0.47 | 0.83 | 0.51 |

**Claims**

1. A thermoplastic composition characterized in that it comprises, per 100 parts by weight of polymeric materials, as one polymeric material from about 20 to about 90 parts by weight of crystalline polyamide and as second polymeric material from about 10 to about 80 parts by weight of synthetic rubbery polymer which rubbery polymer comprises, for a total of 100 parts by weight, from about 25 to about 40 parts by weight of acrylonitrile or methacrylonitrile, from about 0.5 to about 10 parts by weight of one or more α,β-unsaturated carboxylic acid and the balance butadiene, and as non-polymeric additives from about 0.1 to about 15 parts by weight per 100 parts by weight of polyamide of an additive selected from the halides of lithium, magnesium, calcium and zinc, and from about 1 to about 10 parts by weight per 100 parts by weight of polymeric materials of an additive selected from the oxides and hydroxides of magnesium, calcium, barium and zinc and the peroxides of calcium and zinc.

2. The composition of Claim 1 characterized in that it comprises as polymeric materials from about 35 to about 90 parts by weight of crystalline polyamide and from about 10 to about 65 parts by weight of synthetic rubbery polymer.

3. The composition of Claim 2 characterized in that it comprises as polymeric materials from about 35 to about 50 parts by weight of crystalline polyamide and from about 50 to about 65 parts by weight of synthetic rubbery polymer.

4. The composition of Claim 2 characterized in that it comprises as polymeric materials from about 60 to about 90 parts by weight of crystalline polyamide and from about 10 to about 40 parts by weight of synthetic rubbery polymer.

5. The composition of Claim 2 characterized in that the synthetic rubbery polymer contains from about 25 to about 40 parts by weight of acrylonitrile.

6. The composition of Claim 5 characterized in that the α,β-unsaturated carboxylic acid of the synthetic rubbery polymer is selected from acrylic, methacrylic, fumaric, maleic and itaconic acid.

10

7. The composition of Claim 2 characterized in that the halide additive is selected from the chlorides and bromides of lithium, magnesium, calcium and zinc.

8. The composition of Claim 7 characterized in that the amount of said halide additive is from about 1 to about 12 parts by weight per 100 parts by weight of polyamide.

9. The composition of Claim 7 characterized in that said halide additive is lithium chloride present in an amount of from about 2 to about 10 parts by weight per 100 parts by weight of polyamide.

10. The composition of Claim 2 characterized in that the second additive is selected from zinc oxide, zinc hydroxide, zinc peroxide, magnesium oxide, magnesium hydroxide, calcium oxide and calcium hydroxide.

11. The composition of Claim 10 characterized in that the amount of said second additive is from about 1 to about 8 parts by weight per 100 parts by weight of polyamide plus synthetic polymer.

12. The composition of Claim 10 characterized in that said second additive is zinc oxide present in an amount of from about 2 to about 6 parts by weight per 100 parts by weight of polyamide plus synthetic polymer.

13. The composition of Claim 2 characterized in that the synthetic rubbery polymer contains from about 25 to about 40 parts by weight of acrylonitrile and the α,β-unsaturated carboxylic acid is selected from acrylic, methacrylic, fumaric, maleic and itaconic acids, the halide additive is selected from the chlorides and bromides of lithium, magnesium, calcium and zinc and is present in an amount of from about 1 to about 12 parts by weight per 100 parts by weight of polyamide, and the second additive is selected from zinc oxide, zinc hydroxide, zinc peroxide, magnesium oxide, magnesium hydroxide, calcium oxide and calcium hydroxide present in an amount of from about 1 to about 8 parts by weight per 100 parts by weight of polyamide plus synthetic polymer.

14. The composition of Claim 13 characterized in that said halide additive is lithium chloride present in an amount of from about 2 to about 10 parts by weight per 100 parts by weight of polyamide and said second additive is zinc oxide present in an amount of from about 2 to about 6 parts by weight per 100 parts by weight of polyamide plus synthetic polymer.

15. The composition of Claim 1 characterized in that it also contains any one or more of fillers, processing aids and antioxidants or stabilizers.

16. The composition of Claim 15 characterized in that the fillers are selected from carbon black, silica, calcium silicate, clay, calcium carbonate and mixtures thereof present in amounts of from about 2 to about 20 parts by weight per 100 parts by weight of polyamide plus synthetic polymer.

17. A process for producing a thermoplastic polymeric composition characterized in that it comprises mixing from about 20 to about 90 parts by weight of a crystalline polyamide and from about 0.1 to about 15 parts by weight per 100 parts by weight of polyamide of an additive selected from the halides of lithium, magnesium, calcium and zinc, from about 10 to about 80 parts by weight of a synthetic rubbery polymer, for a total of 100 parts by weight of polyamide and synthetic polymer, said synthetic polymer comprising, for a total of 100 parts by weight, from about 25 to about 40 parts by weight of acrylonitrile or methacrylonitrile, from about 0.5 to about 10 parts by weight of one or more α,β-unsaturated carboxylic acid and the balance butadiene, and an additive selected from the oxides and hydroxides of magnesium, calcium, barium and zinc and the peroxides of calcium and zinc in an amount of from about 1 to about 10 parts by weight per 100 parts by weight of polyamide and synthetic polymer, said mixing being at a temperature of from about 180°C to the melting point of the polyamide for a time long enough to yield an essentially uniform thermoplastic polymeric composition.

18. The process of Claim 17 characterized in that the crystalline polyamide is present in an amount of from about 35 to about 90 parts by weight and the synthetic polymer is present in an amount of from about 10 to about 65 parts by weight.

19. The process of Claim 17 characterized in that the mixing is at a temperature of from about 180° to about 230°C.

20. The process of Claim 17 characterized in that the mixing is undertaken in essentially one stage.

21. The process of Claim 17 characterized in that the mixing is undertaken in two or more stages with the polyamide and the halide additive being at least partially mixed first and the remaining components being added thereto or separately in a second mixing operation.

**Patentansprüche**

1. Thermoplastische Zusammensetzung, dadurch gekennzeichnet, daß sie auf 100 Gew.-Teile polymerer Materialien als ein polymeres Material etwa 20 bis etwa 90 Gew.-Teile kristallines Polyamid und als zweites polymeres Material etwa 10 bis etwa 80 Gew.-Teile eines synthetischen kautschukartigen Polymers, wobei das kautschukartige Polymer, bezogen auf insgesamt 100 Gew.-Teile, etwa 25 bis etwa 40 Gew.-Teile Acrylnitril oder Methacrylnitril, etwa 0,5 bis etwa 10 Gew.-Teile einer oder mehrerer α,ß-ungesättigter Carbonsäuren und als Rest Butadien umfaßt, und als nicht-polymere Zusatzstoffe auf 100 Gew.-Teile Polyamid etwa 0,1 bis etwa 15 Gew.-Teile eines Additivs, das aus den Halogeniden von Lithium, Magnesium, Calcium und Zink ausgewählt ist, und auf 100 Gew.-Teile der polymeren Materialien etwa 1 bis etwa 10 Gew.-Teile eines Additivs, das aus den Oxiden und Hydroxiden von Magnesium, Calcium, Barium und Zink und den Peroxiden von Calcium und Zink ausgewählt ist, umfaßt.

2. Zusammensetzung nach Anspruch 1, dadurch gekennzeichnet, daß sie als polymere Materialien etwa 35 bis etwa 90 Gew.-Teile kristallines Polyamid von etwa 10 bis etwa 65 Gew.-Teile des synthetischen kautschukartigen Polymers umfaßt.

3. Zusammensetzung nach Anspruch 2, dadurch gekennzeichnet, daß sie als polymere Materialien etwa 35 bis etwa 50 Gew.-Teile kristallines Polyamid und etwa 50 bis etwa 65 Gew.-Teile des synthetischen kautschukartigen Polymers umfaßt.

4. Zusammensetzung nach Anspruch 2, dadurch gekennzeichnet, daß sie als polymere Materialien etwa 60 bis etwa 90 Gew.-Teile kristallines Polyamid und etwa 10 bis etwa 40 Gew.-Teile des synthetischen kautschukartigen Polymers umfaßt.

5. Zusammensetzung nach Anspruch 2, dadurch gekennzeichnet, daß das synthetische kautschukartige Polymer etwa 25 bis etwa 40 Gew.-Teile Acrylnitril enthält.

6. Zusammensetzung nach Anspruch 5, dadurch gekennzeichnet, daß die α,ß-ungesättigte Carbonsäure des synthetischen kautschukartigen Polymers aus Acryl-, Methacryl-, Fumar-, Malein- und Itaconsäure ausgewählt ist.

7. Zusammensetzung nach Anspruch 2, dadurch gekennzeichnet, daß das Halogenid-Additiv aus den Chloriden und Bromiden von Lithium, Magnesium, Calcium und Zink ausgewählt ist.

8. Zusammensetzung nach Anspruch 7, dadurch gekennzeichnet, daß die Menge des Halogenid-Additivs etwa 1 bis etwa 12 Gew.-Teile auf 100 Gew.-Teile des Polyamids beträgt.

9. Zusammensetzung nach Anspruch 7, dadurch gekennzeichnet, daß das Halogenid-Additiv Lithiumchlorid ist, das in einer Menge von etwa 2 bis etwa 10 Gew.-Teilen auf 100 Gew.-Teile des Polyamids vorhanden ist.

10. Zusammensetzung nach Anspruch 2, dadurch gekennzeichnet, daß das zweite Additiv aus Zinkoxid, Zinkhydroxid, Zinkperoxid, Magnesiumoxid, Magnesiumhydroxid, Calciumoxid und Calciumhydroxid ausgewählt ist.

11. Zusammensetzung nach Anspruch 10, dadurch gekennzeichnet, daß die Menge des zweiten Additivs etwa 1 bis etwa 8 Gew.-Teile auf 100 Gew.-Teile Polyamid plus synthetisches Polymer beträgt.

12. Zusammensetzung nach Anspruch 10, dadurch gekennzeichnet, daß das zweite Additiv Zinkoxid ist, das in einer Menge von etwa 2 bis etwa 6 Gew.-Teile auf 100 Gew.-Teile Polyamid plus synthetisches Polymer vorhanden ist.

13. Zusammensetzung nach Anspruch 2, dadurch gekennzeichnet, daß das synthetische kautschukartige Polymer etwa 25 bis etwa 40 Gew.-Teile Acrylnitril enthält und die α,ß-ungesättigte Carbonsäure aus Acryl-, Methacryl-, Fumar-, Malein- und Itaconsäure ausgewählt ist, das Halogenid-Additiv aus den Chloriden und Bromiden von Lithium, Magnesium, Calcium und Zink ausgewählt ist und in einer Menge von etwa 1 bis etwa 12 Gew.-Teilen auf 100 Gew.-Teile des Polyamids vorhanden ist, und das zweite Additiv aus Zinkoxid, Zinkhydroxid, Zinkperoxid, Magnesiumoxid, Magnesiumhydroxid, Calciumoxid und Calciumhydroxid ausgewählt ist und in einer Menge von etwa 1 bis etwa 8 Gew.-Teilen auf 100 Gew.-Teile Polyamid plus synthetisches Polymer vorhanden ist.

14. Zusammensetzung nach Anspruch 13, dadurch gekennzeichnet, daß das Halogenid-Additiv Lithiumchlorid ist, das in einer Menge von etwa 2 bis etwa 10 Gew.-Teilen auf 100 Gew.-Teile des Polyamids vorhanden ist und das zweite Additiv Zinkoxid ist, das in einer Menge von etwa 2 bis etwa 6 Gew.-Teilen auf 100 Gew.-Teile Polyamid plus synthetische Polymer vorhanden ist.

15. Zusammensetzung nach Anspruch 1, dadurch gekennzeichnet, daß sie auch irgendein oder mehrere Füllmaterialien, Verarbeitungshilfsmittel und Antioxidationsmittel oder Stabilisatoren enthält.

16. Zusammensetzung nach Anspruch 15, dadurch gekennzeichnet, daß die Füllmaterialien aus Ruß, Siliciumdioxid, Calciumsilicat, Ton, Calciumcarbonat und deren Mischungen ausgewählt sind, die in Mengen von etwa 2 bis etwa 20 Gew.-Teilen auf 100 Gew.-Teile Polyamid plus synthetisches Polymer vorhanden sind.

17. Verfahren zur Herstellung einer thermoplastischen polymeren Zusammensetzung, dadurch gekennzeichnet, daß es das Vermischen von etwa 20 bis etwa 90 Gew.-Teilen eines kristallinen Polyamids und, auf 100 Gew.-Teile Polyamid, etwa 0,1 bis etwa 15 Gew.-Teilen eines Additivs, das aus den Halogeniden von Lithium, Magnesium, Calcium und Zink ausgewählt ist, etwa 10 bis etwa 80 Gew.-Teilen eines synthetischen kautschukartigen Polymers zu einer Gesamtmenge von 100 Gew.-Teilen Polyamid und synthetischem Polymer, wobei das genannte synthetische Polymer, bezogen auf insgesamt 100 Gew.-Teile, etwa 25 bis etwa 40 Gew.-Teile Acrylnitril oder Methacrylnitril, etwa 0,5 bis etwa 10 Gew.-Teile einer oder mehrerer α,ß-ungesättigter Carbonsäuren und als Rest Butadien umfaßt, und eines Additivs, das aus den Oxiden und Hydroxiden von Magnesium, Calcium, Barium und Zink und den Peroxiden von Calcium und Zink ausgewählt ist, in einer Menge von etwa 1 bis etwa 10 Gew.-Teilen auf 100 Gew.-Teile Polyamid und synthetischem Polymer umfaßt, wobei das Vermischen bei einer Temperatur von etwa 180°C bis zum Schmelzpunkt des Polyamids während einer Zeitspanne erfolgt, die zur Erzielung einer im wesentlichen einheitlichen thermoplastischen polymeren Zusammensetzung ausreichend ist.

18. Verfahren nach Anspruch 17, dadurch gekennzeichnet, daß das kristalline Polyamid in einer Menge von etwa 35 bis etwa 90 Gew.-Teilen und das synthetische Polymer in einer Menge von etwa 10 bis etwa 65 Gew.-Teilen vorliegen.

19. Verfahren nach Anspruch 17, dadurch gekennzeichnet, daß das Vermischen bei einer Temperatur von etwa 180°C bis etwa 230°C erfolgt.

20. Verfahren nach Anspruch 17, dadurch gekennzeichnet, daß das Vermischen im wesentlichen in einer Stufe vorgenommen wird.

21. Verfahren nach Anspruch 17, dadurch gekennzeichnet, daß das Vermischen in zwei oder mehr Stufen vorgenommen wird, wobei das Polyamid und das Halogenid-Additiv wenigstens teilweise zuerst vermischt werden und die übrigen Komponenten zusammen oder getrennt in einem zweiten Arbeitsgang des Mischens zugesetzt werden.

**Revendications**

1. Composition thermoplastique, caractérisée en ce qu'elle comprend, pour 100 parties en poids de matières polymériques, en tant que l'une des matières polymériques, environ 20 à environ 90 parties en poids d'un polyamide cristallin et, en tant que seconde matière polymérique, environ 10 à environ 80 parties en poids d'un polymère synthétique du type caoutchouc, ce polymère comprenant, pour un total de 100 parties en poids, environ 25 à environ 40 parties en poids d'acrylonitrile ou de méthacrylonitrile, environ 0,5 à environ 10 parties en poids d'un ou plusieurs acides carboxyliques à non-saturation $\alpha,\beta$, le reste étant du butadiène, et, en tant qu'additifs non polymériques, environ 0,1 à environ 15 parties en poids, pour 100 parties en poids de polyamide, d'un additif choisi entre les halogénures de lithium, magnésium, calcium et zinc et environ 1 à environ 10 parties en poids, pour 100 parties en poids de matières polymériques, d'un additif choisi entre les oxydes et hydroxydes de magnésium, calcium, baryum et zinc et les peroxydes de calcium et de zinc.

2. Composition suivant la revendication 1, caractérisée en ce qu'elle comprend comme matières polymériques environ 35 à environ 90 parties en poids de polyamide cristallin et environ 10 à environ 65 parties en poids de polymère synthétique du type caoutchouc.

3. Composition suivant la revendication 2, caractérisée en ce qu'elle comprend comme matières polymériques environ 35 à environ 50 parties en poids de polyamide cristallin et environ 50 à environ 65 parties en poids de polymère synthétique du type caoutchouc.

4. Composition suivant la revendication 2, caractérisée en ce qu'elle comprend comme matières polymériques environ 60 à environ 90 parties en poids de polyamide cristallin et environ 10 à environ 40 parties en poids de polymère synthétique du type caoutchouc.

5. Composition suivant la revendication 2, caractérisée en ce que le polymère synthétique du type caoutchouc contient environ 25 à environ 40 parties en poids d'acrylonitrile.

6. Composition suivant la revendication 5, caractérisée en ce que l'acide carboxylique à non-saturation $\alpha,\beta$ du polymère synthétique du type caoutchouc est choisi entre les acides acrylique, méthacrylique, fumarique, maléique et itaconique.

7. Composition suivant la revendication 2, caractérisée en ce que l'additif du type halogénure est choisi entre les chlorures et bromures de lithium, magnésium, calcium et zinc.

8. Composition suivant la revendication 7, caractérisée en ce que la quantité d'additif du type halogénure va d'environ 1 à environ 12 parties en poids pour 100 parties en poids de polyamide.

9. Composition suivant la revendication 7, caractérisée en ce que l'additif du type halogénure est le chlorure de lithium, présent en une quantité d'environ 2 à environ 10 parties en poids pour 100 parties en poids de polyamide.

10. Composition suivant la revendication 2, caractérisée en ce que le second additif est choisi entre l'oxyde de zinc, l'hydroxyde de zinc, le peroxyde de zinc, l'oxyde de magnésium, l'hydroxyde de magnésium, l'oxyde de calcium et l'hydroxyde de calcium.

11. Composition suivant la revendication 10, caractérisée en ce que la quantité de second additif va d'environ 1 à environ 8 parties en poids pour 100 parties en poids de polyamide plus le polymère synthétique.

12. Composition suivant la revendication 10, caractérisée en ce que le second additif est l'oxyde de zinc présent en une quantité d'environ 2 à environ 6 parties en poids pour 100 parties en poids de polyamide plus le polymère synthétique.

13. Composition suivant la revendication 2, caractérisée en ce que le polymère synthétique du type caoutchouc contient environ 25 à environ 40 parties en poids d'acrylonitrile et l'acide carboxylique à non-saturation $\alpha,\beta$ est choisi entre les acides acrylique, méthacrylique, fumarique, maléique et itaconique, l'additif du type halogénure est choisi entre les chlorures et bromures de lithium, magnésium, calcium et zinc et est présent en une quantité d'environ 1 à environ 12 parties en poids pour 100 parties en poids de polyamide, et le second additif est choisi entre l'oxyde de zinc, l'hydroxyde de zinc, le peroxyde de zinc, l'oxyde de magnésium, l'hydroxyde de magnésium, l'oxyde de calcium et l'hydroxyde de calcium, présents en une quantité d'environ 1 à environ 8 parties en poids pour 100 parties en poids de polyamide plus le polymère synthétique.

14. Composition suivant la revendication 13, caractérisée en ce que l'additif du type halogénure est le chlorure de lithium présent en une quantité d'environ 2 à environ 10 parties en poids pour 100 parties en poids de polyamide et le second additif est l'oxyde de zinc présent en une quantité d'environ 2 à environ 6 parties en poids pour 100 parties en poids de polyamide plus le polymère synthétique.

15. Composition suivant la revendication 1, caractérisée en ce qu'elle contient aussi l'une quelconque ou plusieurs des substances telles que charges, substances auxiliaires de traitement et anti-oxydants ou agents stabilisants.

16. Composition suivant la revendication 15, caractérisée en ce que les charges sont choisies entre le noir de carbone, la silice, le silicate de calcium, l'argile, le carbonate de calcium et leurs mélanges, présents en quantités d'environ 2 à environ 20 parties en poids pour 100 parties en poids de polyamide plus le polymère synthétique.

17. Procédé de production d'une composition polymérique thermoplastique, caractérisé en ce qu'il consiste à mélanger environ 20 à environ 90 parties en poids d'un polyamide cristallin et environ 0,1 à environ 15 parties en poids, pour 100 parties en poids du polyamide, d'un additif choisi entre les halogénures de lithium, magnésium, calcium et zinc, environ 10 à environ 80 parties en poids d'un polymère synthétique du type caoutchouc, pour un total de 100 parties en poids du polyamide et du polymère synthétique, ledit polymère synthétique comprenant, pour un total de 100 parties en poids, environ 25 à environ 40 parties en poids d'acrylonitrile ou de méthacrylonitrile, environ 0,5 à environ 10 parties en poids d'un ou plusieurs acides carboxyliques à non-saturation α,β, le reste étant du butadiène, et un additif choisi entre les oxydes et hydroxydes de magnésium, calcium, baryum et zinc et les peroxydes de calcium et de zinc en une quantité d'environ 1 à environ 10 parties en poids pour 100 parties en poids de polyamide et de polymère synthétique, ledit mélange étant effectué à une température allant d'envirion 180°C au point de fusion du polyamide pendant une durée suffisante pour produire une composition polymérique thermoplastique essentiellement uniforme.

18. Procédé suivant la revendication 17, caractérisé en ce que le polyamide cristallin est présent en une quantité d'environ 35 à environ 90 parties en poids et le polymère synthétique est présent en une quantité d'environ 10 à environ 65 parties en poids.

19. Procédé selon la revendication 17, caractérisé en ce que le mélange est effectué à une température d'environ 180 à environ 230°C.

20. Procédé suivant la revendication 17, caractérisé en ce que l'opération de mélange est essentiellement effectuée en une seule étape.

21. Procédé suivant la revendication 17, caractérisé en ce que l'opération de mélange est effectuée en deux ou plus de deux étapes, le polyamide et l'additif du type halogénure étant en premier lieu au moins partiellement mélangés et les composants restants étant ajoutés au mélange ou ajoutés séparément dans une seconde opération de mélange.